# EUROPÄISCHE PATENTSCHRIFT

(11) **EP 3 166 820 B1**
(45) Veröffentlichungstag und Bekanntmachung des Hinweises auf die Patenterteilung: **19.09.2018**
(21) Anmeldenummer: 15750630.4
(22) Anmeldetag: 07.07.2015
(51) Int. Cl.: B60R 1/00, B60R 1/074, B60R 1/12

(54) **SYSTEM ZUM ERFASSEN EINER FAHRZEUGUMGEBUNG EINES KRAFTFAHRZEUGES**
SYSTEM FOR DETECTING A VEHICLE ENVIRONMENT OF A MOTOR VEHICLE
SYSTÈME POUR DÉTECTER L'ENVIRONNEMENT D'UN VÉHICULE AUTOMOBILE

(30) Priorität: 09.07.2014 DE 102014213279
(43) Veröffentlichungstag der Anmeldung: 17.05.2017
(73) Patentinhaber: Conti Temic microelectronic GmbH, 90411 Nürnberg (DE)
(72) Erfinder: FENDT, Günter, Anton, 86529 Schrobenhausen (DE)
(86) Internationale Anmeldenummer: PCT/DE2015/200401
(87) Internationale Veröffentlichungsnummer: WO 2016/004946

(56) Entgegenhaltungen:
- DE-A1-102010 005 638
- DE-A1-102012 003 561
- JP-A- 2004 194 071
- US-A1- 2005 146 604
- US-A1- 2010 066 833
- US-A1- 2012 249 796

## Beschreibung

Die Erfindung betrifft ein System zum Erfassen einer Fahrzeugumgebung eines Kraftfahrzeugs, insbesondere ein System zum Erfassen einer hinteren Fahrzeugumgebung falls sich die Außenspiegel des Kraftfahrzeuges in einer zum Fahrzeug geklappten Stellung befinden.

Zur Überwachung einer hinteren Fahrzeugumgebung eines Kraftfahrzeuges durch einen Fahrer des Kraftfahrzeuges werden neben einem Innenspiegel des Kraftfahrzeuges für gewöhnlich auch linke und rechte Außenspiegel verwendet, welche beispielsweise seitlich an den Türen oder der jeweiligen A Säule angelenkt sind.

Da die Außenspiegel für gewöhnlich außerhalb des Kraftfahrzeuges angeordnet sind, erfordern diese zusätzlichen Platz in der Breite des Kraftfahrzeuges und bewirken somit, insbesondere bei höheren Fahrzeuggeschwindigkeiten, einen zusätzlichen Luftwiderstand, zumal die Außenspiegel bei höheren Fahrzeuggeschwindigkeiten als Windfangfläche dienen. So kann ein Außenspiegel eines Kraftfahrzeuges zu einer Erhöhung des Luftwiderstandbeiwertes (CW-Wertes) bei höheren Fahrzeuggeschwindigkeiten von 5 % und mehr führen, was wiederum in einem erhöhten Kraftstoffverbrauch resultiert.

Aus der Druckschrift DE 38 39 322 A1 ist ein Außenspiegel für ein Kraftfahrzeug bekannt, welcher mittels einer Betätigungseinrichtung zwischen einer Normalstellung und einer zum Fahrzeug geklappten Stellung verschwenkbar am Fahrzeug angelenkt ist, um den Außenspiegel bei hohen Fahrzeuggeschwindigkeiten an das Fahrzeug zu klappen und hierdurch die Zunahme des Kraftstoffverbrauchs bei hohen Geschwindigkeiten aufgrund des Luftwiderstandbeiwertes der Außenspiegel zu verringern.

Die US 2012/0249766 A1 beschreibt eine Bildverarbeitungsvorrichtung mit einer Bilderfassung zum Erfassen von Kamerabilder, die von Kameras, die an Türspiegeln angeordnet sind, bereitgestellt werden, einer Bilderauswahlvorrichtung zum Auswählen von einem ersten Ausschnitt eines Kamerabilds, wenn die Türspiegel eingeklappt sind und zum Auswählen eines zweiten Ausschnitts eines Kamerabilds, wenn die Türspiegel ausgefahren sind.

Die JP 2004 4194071 A beschreibt ein System zum Anzeigen von Kamerabildern, wobei die Bilder von an verschwenkbaren Außenspiegeln angeordneten Kameras aufgenommen werden.

Die US 2010/0066833 A1 beschreibt eine Fahrzeugumgebungsüberwachungssystem mit einer Vielzahl an Bilderfassungsgeräten, wobei einige der Bilderfassungsgeräten an einklappbaren Spiegeln angeordnet sind.

Befinden sich die Außenspiegel des Kraftfahrzeuges jedoch in einer zum Fahrzeug geklappten Stellung, so können diese nicht mehr zur Überwachung einer hinteren Fahrzeugumgebung des Kraftfahrzeuges durch den Fahrer des Kraftfahrzeuges herangezogen werden. Insbesondere bei hohen Fahrzeuggeschwindigkeiten ist ein Fahrer eines Kraftfahrzeuges jedoch auf Informationen über die hintere Fahrzeugumgebung angewiesen, um mögliche Gefahrensituationen frühzeitig erkennen und entsprechend reagieren zu können.

Aufgabe der vorliegenden Erfindung ist es, ein System zum Erfassen einer Fahrzeugumgebung eines Kraftfahrzeuges anzugeben, mit welchem eine hinterher Fahrzeugumgebung auch dann erfasst werden kann, wenn sich die Außenspiegel des Kraftfahrzeuges in einer zum Fahrzeug geklappten Stellung befinden.
Gelöst wird diese Aufgabe durch den Gegenstand des unabhängigen Anspruchs. Weitere vorteilhafte Weiterbildungen sind Gegenstand der abhängigen Ansprüche.
Gemäß einer Ausführungsform der Erfindung wird diese Aufgabe gelöst durch ein System zum Erfassen einer Fahrzeugumgebung eines Kraftfahrzeuges, das wenigstens einen verschwenkbaren-Außenspiegel, welcher zwischen einer Normalstellung und einer zum Fahrzeug geklappten Stellung verschwenkt werden kann, sowie eine an dem wenigstens einem verschwenkbaren Außenspiegel angeordnete Kamera zum Erfassen der Fahrzeugumgebung aufweist. Dabei ist die Kamera derart an dem wenigstens einen verschwenkbaren Außenspiegel angeordnet, dass in der Normalstellung des wenigstens einen Außenspiegels ein Blickfeld der Kamera nach unten in Richtung einer Fahrbahnoberfläche gerichtet ist, zum Erfassen einer näheren Fahrzeugumgebung, und in der zum Fahrzeug geklappten Stellung des wenigstens einen Außenspiegels das Blickfeld der Kamera entgegen der Fahrtrichtung nach hinten gerichtet ist, zum Erfassen einer hinteren Fahrzeugumgebung.

Grundgedanke ist somit, eine Kamera an einem Außenspiegel eines Kraftfahrzeuges derart anzuordnen, dass diese mehrfunktional verwendet werden kann, das heißt zur Erfassung einer näheren Fahrzeugumgebung falls sich der Außenspiegel in seiner Normalstellung befindet, und zum Erfassen einer hinteren Fahrzeugumgebung falls der Außenspiegel in eine zum Fahrzeug geklappten Stellung verschwenkt wurde.

Ein derartiges System hat den Vorteil, dass mit diesem eine hintere Fahrzeugumgebung auch dann erfasst werden kann, wenn sich der Außenspiegel in einer zum Fahrzeug geklappten Stellung befindet. So können dem Fahrer des Kraftfahrzeuges mittels der am Außenspiegel angeordneten Kamera, welche als Ersatz für die Funktion des Außenspiegels dient falls dieser in eine an das Fahrzeug geklappte Stellung verschwenkt wurde, beispielsweise um den Kraftstoffverbrauch bei hohen Geschwindigkeiten zu reduzieren, auch in dieser Situation Informationen über eine hintere Fahrzeugumgebung zur Verfügung gestellt werden, so dass dieser rechtzeitig auf eine mögliche Gefahrensituation, beispielsweise auf eine drohende Kollision mit einem sich von hinten nähernden weiteren Kraftfahrzeug, reagieren und entsprechende Fahrmanöver einleiten kann. Weiter sind an einem Außenspiegel eines Kraftfahrzeuges angeordnete Kameras zum Überwachen einer näheren Fahrzeugumgebung, beispielsweise als Teil eines 360°-Rundumsichtsystems für das Kraftfahrzeug, bekannt, so dass das System durch für gewöhnliche Kraftfahrzeuge bekannte und gebräuchliche Komponenten realisiert werden kann, ohne dass aufwändige und kostspielige Umbauten vonnöten wären.

Das System kann dabei weiter ein Betätigungsmittel zum automatischen Verschwenken des Außenspiegels von der Normalstellung in die zum Fahrzeug geklappte Stellung als Reaktion auf das Vorliegen einer Verschwenkbedingung aufweisen.

Dabei kann es sich bei der Verschwenkbedingung um ein Überschreiten eines Grenzwertes für eine Fahrzeuggeschwindigkeit oder ein Unterschreiten eines Grenzwertes für eine Fahrbahnbreite handeln.

Dass das Verschwenken des Außenspiegels von der Normalstellung in die zum Fahrzeug geklappte Stellung mittels des Betätigungsmittels automatisch erfolgen kann, hat den Vorteil, dass der Fahrer des Kraftfahrzeuges, insbesondere bei hohen Fahrzeuggeschwindigkeiten, nicht unnötig vom Fahrgeschehen abgelenkt wird und sich somit stärker auf die vor ihm liegende Verkehrssituation konzentrieren kann. Weiter sind Betätigungsmittel zum automatischen Verschwenken von Außenspiegeln von einer Normalstellung in eine zum Fahrzeug geklappte Stellung für gewöhnliche Kraftfahrzeuge bekannt, beispielsweise um das Kraftfahrzeug in einer Parkposition in eine geschützte Position zu überführen, so dass für gewöhnliche Kraftfahrzeuge bekannte Komponenten und Funktionen verwendet werden können, ohne das aufwendige und kostspielige Umbauten vonnöten wären. Bei dem Grenzwert für die Fahrzeuggeschwindigkeit kann es sich dabei beispielsweise um einen vorgegebenen hohen Geschwindigkeitswert von etwa 100 Km/h handeln. Der Grenzwert für die Fahrbahnbreite kann weiter beispielsweise dann unterschritten sein, wenn das Kraftfahrzeug mit ausgeklappten Außenspiegeln, das heißt mit Außenspiegeln in Normalstellung, die komplette Fahrbahnbreite einer aktuell befahrenen Straße ausfüllen würde. Das Betätigungsmittel kann dabei weiter auch ausgebildet sein, die Außenspiegel automatisch wieder in die Normalstellung zu verschwenken, falls die Verschwenkbedingung nicht mehr vorliegt. Ferner kann das Betätigungsmittel aber auch zum manuellen Verschwenken des Außenspiegels von der Normalstellung in die zum Fahrzeug geklappte Stellung ausgebildet sein.

Zudem kann das System eine Anzeigeeinheit zum Visualisieren der durch die Kamera erfassten Fahrzeugumgebung aufweisen. Insbesondere können die durch die Kamera erfassten Bilddaten dabei an eine innerhalb des Kraftfahrzeuges angeordnete Anzeigeeinheit weitergeleitet und auf dieser dargestellt werden und einem Fahrer des Kraftfahrzeuges über diese somit die Möglichkeit gegeben werden, eine hintere Fahrzeugumgebung einzusehen, das heißt zu überwachen, auch wenn sich der Außenspiegel in einer zum Fahrzeug geklappten Stellung befindet, das heißt nicht zur Überwachung der hinteren Fahrzeugumgebung herangezogen werden kann. Durch Einsehen der hinteren Fahrzeugumgebung über die Anzeigeeinheit hat der Fahrer des Kraftfahrzeuges nunmehr die Möglichkeit, auch bei eingeklappten Außenspiegeln eine mögliche Gefahrensituation frühzeitig erkennen und rechtzeitig auf die Situation, beispielsweise eine drohende Kollision mit einem sich von hinten näherndem weiteren Kraftfahrzeug, reagieren und entsprechende Fahrmanöver einleiten zu können.

Gemäß einer Ausführungsform kann das System weiter ein Steuerungsmittel zum Anpassen von Erfassungseigenschaften der Kamera in Abhängigkeit einer aktuellen Position des Außenspiegels aufweisen. Durch Anpassen der Erfassungseigenschaften der Kamera kann den unterschiedlichen Anforderungen an die einzelnen Fahrsituationen, beispielsweise in punkto Reaktionsweg, und sich hieraus ergebenden Erfordernissen für die Erfassungseigenschaften der Kamera Rechnung getragen werden. So ergeben sich beispielsweise bei hohen Fahrzeuggeschwindigkeiten, insbesondere bei Geschwindigkeiten, welche höher sind als der Grenzwert für die Fahrzeuggeschwindigkeit ab dem der Außenspiegel in die zum Fahrzeug geklappte Stellung verschwenkt wird, deutlich längere Reaktionswege als bei niedrigeren Fahrzeuggeschwindigkeiten, so dass sicherzustellen ist, dass die Erfassungseigenschaften der Kamera derart gewählt werden, dass mögliche Gefahrensituationen, beispielsweise sich von hinten nähernde Kraftfahrzeuge, möglichst frühzeitig erfasst werden können.

Bei den Erfassungseigenschaften kann es sich dabei beispielsweise um einen Erfassungsbereich der Kamera handeln. So kann die Kamera eine Zoomfunktion zum Einstellen des Erfassungsbereichs der Kamera aufweisen und das Steuerungsmittel ausgebildet sein, als Reaktion auf das Verschwenken des Außenspiegels von der Normalstellung in die zum Fahrzeug geklappte Stellung, den Erfassungsbereich der Kamera von einem Nahbereich auf ein Fernbereich zu ändern. Der Fernbereich kann dabei, verglichen mit dem Nahbereich, insbesondere eine größere Reichweite, dafür jedoch einen kleineren Winkelbereich erfassen, um den entsprechenden Anforderungen gerecht zu werden, das heißt mögliche Gefahrensituation entsprechend frühzeitig erfassen zu können. Das Steuerungsmittel kann dabei weiter ausgebildet sein, den Erfassungsbereich der Kamera wieder auf den Nahbereich zu ändern, falls der Außenspiegel aus der zum Fahrzeug geklappten Stellung wieder in die Normalstellung zurück verschwenkt wird. Ferner kann es sich bei den Erfassungseigenschaften aber auch um weitere Erfassungscharakteristiken der Kamera, beispielsweise optische Eigenschaften der Kamera, handeln.

Zudem kann das System auch Mittel zum Erfassen einer aktuellen Fahrsituation aufweisen und das Steuerungsmittel ausgebildet sein, den Fernbereich an die aktuelle Fahrsituation anzupassen. Somit kann zur Einstellung der Erfassungseigenschaften der Kamera im Fernbereich zusätzlich eine weitere Funktion, insbesondere eine geschwindigkeitsabhängige Funktion, herangezogen werden, um die Erfassungseigenschaften der Kamera noch gezielter an aktuelle Anforderungen anzupassen. So ist es beispielsweise wünschenswert bei höheren Geschwindigkeiten des Kraftfahrzeugs auf Grund der längeren Reaktionswege einen entsprechend größeren Erfassungsbereich zu gewährleisten, wohingegen bei niedrigeren Geschwindigkeiten des Fahrzeuges der Fokus mehr im näheren Umgebungsbereich des Kraftfahrzeuges liegen sollte.

Dabei kann das Mittel zum Erfassen einer aktuellen Fahrsituation einen Geschwindigkeitssensor zum Erfassen einer aktuellen Fahrzeuggeschwindigkeit und/oder Mittel zur Ortsbestimmung zum Bestimmen eines aktuellen durchfahrenen Ortes und/oder Mittel zum Bestimmen eines Straßentyps einer aktuellen befahrenen Straße aufweisen. Dadurch, dass die aktuelle Fahrzeuggeschwindigkeit zur Einstellung der Erfassungseigenschaften herangezogen wird, kann beispielsweise bei höheren Fahrzeuggeschwindigkeiten, ein größerer Erfassungsbereich realisiert werden, als bei niedrigeren Fahrzeuggeschwindigkeiten, um eine mögliche Gefahrensituation möglichst frühzeitig erfassen zu können. Durch Berücksichtigung eines aktuell durchfahrenen Ortes kann weiter eine aktuelle Fahrzeugposition in die Einstellung der Erfassungseigenschaften der Kamera miteinfließen, beispielsweise berücksichtigt werden, ob sich das Kraftfahrzeug innerhalb oder außerhalb einer geschlossenen Ortschaft befindet. So kann beim Anpassen des Fernbereichs beispielsweise berücksichtigt werden, dass in der Regel innerhalb geschlossener Ortschaften Geschwindigkeitsbegrenzungen gelten. Mittels des bestimmten Straßentyps kann weiter beispielsweise berücksichtigt werden, ob das Kraftfahrzeug aktuell auf einer Autobahn, einer Bundesstraße oder einer Landstraße bewegt wird, so dass die sich hieraus ergebenden Unterschiede, beispielsweise bezüglich der erlaubten Höchstgeschwindigkeiten, entsprechend bei der Anpassung des Fernbereichs berücksichtigt werden können.

Mit einer weiteren Ausführungsform der Erfindung wird auch ein Kraftfahrzeug angegeben, welches ein oben beschriebenes System aufweist.

Ein derartiges Kraftfahrzeug hat den Vorteil, dass durch das System eine hintere Fahrzeugumgebung auch dann erfasst werden kann, wenn sich die Außenspiegel des Kraftfahrzeuges in einer zum Fahrzeug geklappten Stellung befinden. So können dem Fahrer des Kraftfahrzeuges mittels der am Außenspiegel angeordneten Kamera, welche als Ersatz für die Funktion des Außenspiegels dient falls dieser in eine an das Fahrzeug geklappte Stellung verschwenkt wurde um den Kraftstoffverbrauch bei hohen Geschwindigkeiten zu reduzieren, auch in dieser Situation Informationen über eine hintere Fahrzeugumgebung zur Verfügung gestellt werden, so dass dieser rechtzeitig auf eine mögliche Gefahrensituation, beispielsweise auf eine drohende Kollision mit einem sich von hinten nähernden weiteren Kraftfahrzeug, reagieren und entsprechende Fahrmanöver einleiten kann. Weiter sind an einem Außenspiegel eines Kraftfahrzeuges angeordnete Kameras zum Überwachen einer näheren Fahrzeugumgebung, beispielsweise als Teil eines 360°-Rundumsichtsystems für das Kraftfahrzeug, bekannt, so dass das System durch für gewöhnliche Kraftfahrzeuge bekannte und gebräuchliche Komponenten realisiert werden kann, ohne dass aufwändige und kostspielige Umbauten vonnöten wären.

Dabei kann es sich bei der Anzeigeeinheit um einen Bildschirm eines Infotainmentsystems eines Kraftfahrzeuges oder ein Head-up Display handeln. So sind gewöhnliche Kraftfahrzeuge mehr und mehr mit Infotainmentsystemenen ausgestattet, welche eine Vielzahl, insbesondere drahtloser Geräte umfassen und dem Bereitstellen von Entertainmentprogrammen und/oder Informationsprogrammen für die Benutzer des Kraftfahrzeuges dienen. Beispielsweise können Informationsprogramme bereitgestellt werden, welche einen Fahrer des Kraftfahrzeuges in vielfältigen Fahrsituationen durch abrufbare Informationen oder selbsttätig ausgebbare Hinweise unterstützen und/oder automatisch das Fahrverhalten des Kraftfahrzeuges betreffende Aktionen ausführen. Head-up Displays werden bei gewöhnlichen Kraftfahrzeugen dazu verwendet Informationen an Fenster des Kraftfahrzeuges, beispielsweise eine Windschutzscheibe des Kraftfahrzeuges, zu projizieren, welche dort für den Fahrer des Kraftfahrzeuges erkennbar sind, ohne dass dieser den Blick von der von ihm zu beobachtenden Fahrbahn abwenden muss.

Bevorzugt ist die Anzeigeeinheit dabei innerhalb des Kraftfahrzeuges derart angeordnet, dass für den Fahrer des Kraftfahrzeuges die erfasste Fahrzeugumgebung hinter einer Seitenscheibe des Kraftfahrzeuges als virtuelles Bild wahrnehmbar ist, falls sich der Außenspiegel in der zum Fahrzeug geklappten Stellung befindet. So schaut ein Fahrer eines Kraftfahrzeuges für gewöhnlich in die Außenspiegel und somit durch die Außenspiegel des Kraftfahrzeuges, um die hintere Fahrzeugumgebung einzusehen. Somit kann gewährleistet werden, dass dem Fahrer des Kraftfahrzeuges die erfassten Informationen auch wenn der Außenspiegel eingeklappt ist dort zur Verfügung gestellt werden, wo er diese intuitiv erwarten würde. Die Projektion an die Seitenscheibe kann dabei beispielsweise dadurch realisiert werden, dass eine reelle Anzeigeeinheit oder ein Projektor im Bereich des Armaturenbrettes des Kraftfahrzeuges derart angeordnet ist, dass der Fahrer das Bild durch eine Spiegelung in der Seitenscheibe wahrnehmen kann.

Zusammenfassend ist festzustellen, dass mit der vorliegenden Erfindung ein System angegeben wird, mit welchem eine hinterher Fahrzeugumgebung auch dann erfasst werden kann, wenn sich die Außenspiegel des Kraftfahrzeuges in einer zum Fahrzeug geklappten Stellung befinden.

So weist das System eine an einem verschwenkbaren Außenspiegel eines Kraftfahrzeuges angeordnete mehrfunktionale Kamera auf, welche derart an dem Außenspiegel angeordnet ist, dass in der Normalstellung des Außenspiegels ein Blickfeld der Kamera nach unten in Richtung einer Fahrbahnoberfläche gerichtet ist, zum Erfassen einer näheren Fahrzeugumgebung, und in der zum Fahrzeug geklappten Stellung des Außenspiegels das Blickfeld der Kamera entgegen der Fahrtrichtung nach hinten gerichtet ist, zum Erfassen einer hinteren Fahrzeugumgebung.

Weiter kann dabei durch Anpassen der Erfassungseigenschaften der Kamera unterschiedlichen Anforderungen an einzelne Fahrsituationen, beispielsweise in punkto Reaktionsweg, und sich hieraus ergebenden Erfordernissen für die Erfassungseigenschaften der Kamera Rechnung getragen werden. Insbesondere kann dabei die Erfassungsreichweite der Kamera zwischen einem Nahbereich für die Erfassung der näheren Fahrzeugumgebung und einem Fernbereich für die Erfassung der hinteren Fahrbahnumgebung variiert werden.

Zudem kann zum Anpassen der Erfassungseigenschaften der Kamera im Fernbereich zusätzlich noch eine weitere, insbesondere eine geschwindigkeitsabhängige Funktion herangezogen werden, um die Erfassungseigenschaften noch gezielter an aktuelle Anforderungen anzupassen.

Die Erfindung wird nun anhand der beigefügten Figuren näher erläutert.
- Figur 1: zeigt ein schematisches Blockschaltbild eines Systems zum Erfassen einer Fahrzeugumgebung eines Kraftfahrzeuges gemäß Ausführungsformen der Erfindung;
- Figur 2: zeigt eine schematische Ansicht eines Kraftfahrzeuges gemäß Ausführungsformen der Erfindung;
- Figur 3: zeigt eine schematische Ansicht eines Kraftfahrzeuges gemäß Ausführungsformen der Erfindung.

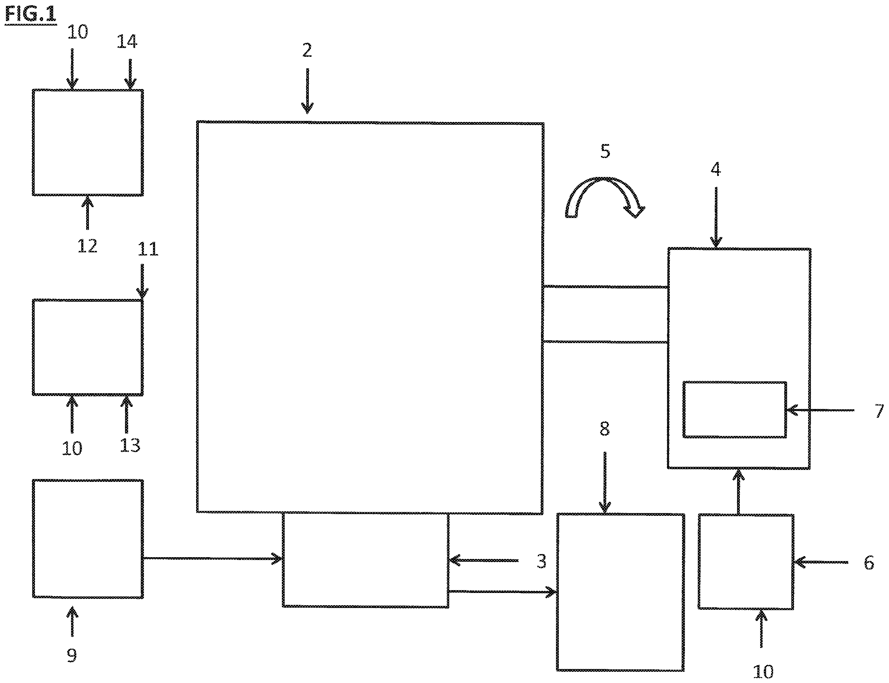

Figur 1 zeigt ein schematisches Blockschaltbild eines Systems 1 zum Erfassen einer Fahrzeugumgebung eines Kraftfahrzeuges gemäß Ausführungsformen der Erfindung.

Wie Figur 1 zeigt, weist das System 1 einen verschwenkbaren Außenspiegel 2, welcher zwischen einer Normalstellung und einer zum Fahrzeug geklappten Stellung verschwenkt werden kann und eine an dem verschwenkbaren Außenspiegel 2 angeordnete Kamera 3 zum Erfassen der Fahrzeugumgebung auf.

Um einen niedrigen Kraftstoffverbrauch bei höheren Fahrzeuggeschwindigkeiten zu gewährleisten, ist der Außenspiegel 2 gemäß Figur 1 dabei derart ausgebildet, das dieser 2 in eine zum Fahrzeug geklappte Stellung verschwenkt werden kann, so dass das Kraftfahrzeug bei hohen Geschwindigkeiten einen möglichst geringen Luftwiderstandsbeiwert aufweist, um den Kraftstoffverbrauch zu reduzieren. Gemäß den Ausführungsformen der Figur 1 weist das System 1 hierzu ein Betätigungsmittel 4 auf, welches über Führungsglieder mit dem Außenspiegel 2 gekoppelt und ausgebildet ist, den Außenspiegel 2 aus einer Normalstellung, in welcher der Außenspiegel 2 zur Außenseite des Fahrzeugs in einem Winkel von etwa 70 bis 85° angeordnet ist, mittels einer kombinierten Drehbewegung die Führungsglieder nach oben wegzudrehen und gleichzeitig an das Fahrzeug anzulegen, um den Außenspiegel 2 in eine zum Fahrzeug geklappte Stellung, das heißt eine Hochgeschwindigkeitsstellung, zu verschwenken. Die kombinierte Drehbewegung wird dabei durch den mit Bezugszeichen 5 versehenen Pfeil symbolisiert. Dabei ist das Betätigungsmittel 4 weiter ausgebildet, durch Umkehrung dieser Drehbewegung den Außenspiegel 2 aus der zum Fahrzeug geklappten Stellung wieder in die Normalstellung zu überführen.

Befindet sich der Außenspiegel 2 nun jedoch in einer zum Fahrzeug geklappten Stellung, das heißt in seiner Hochgeschwindigkeitsstellung, so kann dieser nicht mehr für seine eigentliche Funktion, das heißt zur Überwachung einer hinteren Fahrzeugumgebung des Kraftfahrzeuges durch den Fahrer des Kraftfahrzeuges herangezogen werden.

Gemäß den Ausführungsform der Figur 1 ist die Kamera 3 hierbei derart an dem Außenspiegel 2 angeordnet, dass diese mehrfunktional verwendet werden kann, das heißt in der Normalstellung des Außenspiegels 2 ein Blickfeld der Kamera 3 nach unten in Richtung einer Fahrbahnoberfläche gerichtet ist, zum Erfassen einer näheren Fahrzeugumgebung, und in der zum Fahrzeug geklappten Stellung des Außenspiegels 2 das Blickfeld der Kamera 3 entgegen der Fahrtrichtung nach hinten gerichtet ist, zum Erfassen einer hinteren Fahrzeugumgebung.

Die Kamera 3 gemäß Figur 1 ist dabei Teil eines 360°-Rundumsichtsystems für gewöhnliche Kraftfahrzeuge, so dass das System durch für gewöhnliche Kraftfahrzeuge bekannte und gebräuchliche Komponenten realisiert werden kann, ohne dass aufwändige und kostspielige Umbauten vonnöten wären.

Ein derartiges System 1 hat den Vorteil, dass mit diesem auch dann eine hintere Fahrzeugumgebung erfasst werden kann, wenn sich der Außenspiegel 2 in seiner zum Fahrzeug geklappten Stellung befindet. So können dem Fahrer des Kraftfahrzeuges mittels der am Außenspiegel 2 angeordneten Kamera 3, welche als Ersatz für die Funktion des Außenspiegels 2 dient, falls dieser in seine an das Fahrzeug geklappte Stellung verschwenkt wurde um den Kraftstoffverbrauch bei hohen Geschwindigkeiten zu reduzieren, auch in dieser Situation Informationen über eine hintere Fahrzeugumgebung zur Verfügung gestellt werden, so dass der Fahrer rechtzeitig auf eine mögliche Gefahrensituation, beispielsweise auf eine drohende Kollision mit einem sich von hinten nähernden weiteren Kraftfahrzeug, reagieren und entsprechende Fahrmanöver einleiten kann.

Gemäß den Ausführungsformen der Figur 1 ist das Betätigungsmittel dabei derart ausgebildet, den Außenspiegel 2 als Reaktion auf das Vorliegen einer Verschwenkbedingung automatisch von der Normalstellung in die zum Fahrzeug geklappte Stellung zu verschwenken.

Dabei handelt es sich gemäß den Ausführungsformen der Figur 1 bei der Verschwenkbedingung um ein Überschreiten eines Grenzwertes für die Fahrzeuggeschwindigkeit. Wie Figur 1 zeigt, ist das Betätigungsmittel 4 hierzu mit einem Geschwindigkeitssensor 6 zum Messen einer aktuellen Fahrzeuggeschwindigkeit gekoppelt. Weiter weist das Betätigungsmittel 4 einen Vergleicher 7 auf, um die gemessene aktuelle Fahrzeuggeschwindigkeit mit einem hinterlegten Grenzwert für die Fahrzeuggeschwindigkeit zu vergleichen. Dabei ist das Betätigungsmittel 4 ausgebildet, den Außenspiegel automatisch von der Normalstellung in die zum Fahrzeug geklappte Stellung zu verschwenken, falls in dem Vergleicher 7 detektiert wird, dass die aktuelle Fahrzeuggeschwindigkeit größer als der hinterlegte Grenzwert für die Fahrzeuggeschwindigkeit ist. Bei dem Grenzwert für die Fahrzeuggeschwindigkeit kann es sich hierbei beispielsweise um einen Wert von 100 km/h handeln. Das Betätigungsmittel 4 gemäß Figur 1 ist dabei weiter auch ausgebildet, den Außenspiegel 2 automatisch aus der zum Fahrzeug geklappten Stellung wieder in die Normalstellung zu verschwenken, falls die Verschwenkbedingung nicht mehr vorliegt. Zudem kann das Betätigungsmittel aber auch ausgebildet sein, den Außenspiegel als Rektion auf weitere Verschwenkbedingungen automatisch zu verschwenken, beispielsweise falls eine Breite einer aktuell befahrenen Straße einen hinterlegten Grenzwert für die Fahrbahnbreite unterschreitet. Ferner kann das Betätigungsmittel aber auch zum manuellen Verschwenken des Außenspiegels von der Normalstellung in die zum Fahrzeug geklappte Stellung ausgebildet sein.

Figur 1 zeigt weiter eine Anzeigeeinheit 8 zum Visualisieren der durch die Kamera 3 erfassten Fahrzeugumgebung. Dabei werden die durch die Kamera 3 erfassten Bilddaten an die Anzeigeeinheit 8 weitergeleitet und auf dieser dargestellt und einem Fahrer des Kraftfahrzeuges über die Anzeigeeinheit 8 somit die Möglichkeit gegeben, eine hintere Fahrzeugumgebung einzusehen, das heißt zu überwachen, auch wenn sich der Außenspiegel 2 in seiner zum Fahrzeug geklappten Stellung befindet und somit nicht zur Überwachung der hinteren Fahrzeugumgebung herangezogen werden kann.

Zu erkennen ist weiter ein Steuerungsmittel 9 zum Anpassen von Erfassungseigenschaften der Kamera 3 in Abhängigkeit einer aktuellen Stellung des Außenspiegels 2.

Gemäß den Ausführungsformen der Figur 1 handelt es sich bei den durch das Steuerungsmittel 9 angepassten Erfassungseigenschaften der Kamera 3 dabei um einen Erfassungsbereich der Kamera 3. Dabei weist die Kamera 3 eine Zoomfunktion zum Einstellen eines Erfassungsbereichs der Kamera 3 auf und ist das Steuerungsmittel 9 ausgebildet, als Reaktion auf das Verschwenken des Außenspiegels 2 von der Normalstellung in die zum Fahrzeug geklappte Stellung den Erfassungsbereich der Kamera von einem Nahbereich auf einen Fernbereich zu ändern. Der Fernbereich erfasst dabei, verglichen mit dem Nahbereich, insbesondere eine größere Reichweite, dafür jedoch einen kleineren Winkelbereich, um den entsprechenden Anforderungen gerecht zu werden.

Zu erkennen sind weiter Mittel 10 zum Erfassen einer aktuellen Fahrsituation. Das Steuerungsmittel 9 gemäß Figur 1 ist dabei weiter derart ausgebildet, den Fernbereich an die aktuelle Fahrsituation anzupassen.

Bei den dargestellten Mitteln 10 zum Erfassen einer aktuellen Fahrsituation handelt es sich dabei um einen Geschwindigkeitssensor 6 zum Erfassen einer aktuellen Fahrzeuggeschwindigkeit, um Mittel 11 zur Ortsbestimmung zum Bestimmen eines aktuell durchfahrenen Ortes und um Mittel 12 zum Bestimmen eines Straßentyps einer aktuell befahrenen Straße. Hierdurch kann zur Einstellung der Erfassungseigenschaften der Kamera 3 im Fernbereich zusätzlich eine weitere geschwindigkeitsabhängige Funktion herangezogen werden, um die Erfassungseigenschaften der Kamera 3 noch gezielter an aktuelle Anforderungen anzupassen. So ist es beispielsweise wünschenswert bei höheren Geschwindigkeiten des Kraftfahrzeugs einen entsprechend größeren Erfassungsbereich zu gewährleisten um eine mögliche Gefahrensituation möglichst frühzeitig erfassen zu können, wohingegen bei niedrigeren Geschwindigkeiten des Fahrzeuges der Fokus mehr im näheren Umgebungsbereich des Kraftfahrzeuges liegen sollte. Durch Berücksichtigung eines aktuell befahrenen Ortes kann weiter eine aktuelle Fahrzeugposition in die Einstellung der Erfassungseigenschaften der Kamera miteinfließen, beispielsweise berücksichtigt werden, ob sich das Kraftfahrzeug innerhalb oder außerhalb einer geschlossenen Ortschaft befindet. So kann beim Anpassen des Fernbereichs beispielsweise berücksichtigt werden, dass in der Regel innerhalb geschlossener Ortschaften Geschwindigkeitsbegrenzungen gelten. Mittels des bestimmten Straßentyps kann weiter beispielsweise berücksichtigt werden, ob sich das Kraftfahrzeug aktuell auf einer Autobahn, einer Bundesstraße oder einer Landstraße bewegt, so dass die sich hieraus ergebenden Unterschiede, beispielsweise bezüglich erlaubter Höchstgeschwindigkeiten, entsprechend bei der Anpassung des Fernbereichs berücksichtigt werden können.

Gemäß den Ausführungsformen der Figur 1 handelt es sich bei dem Mittel zur Ortsbestimmung 10 dabei um ein GPS (Global Positioning System) Modul 13. Ferner kann es sich bei dem Mittel zur Ortsbestimmung aber auch um weitere Module zur Positionsbestimmung wie zum Beispiel ein GLONASS (Global Navigation Satellite System) Modul und/oder ein Kompassmodul und/oder ein Galileomodul und/oder ein IRNSS (Indian Regional Navigation Satellite System) Modul und/oder ein EGNOS (European Geostationary Navigation Overlay Service) Modul und/oder ein GAGAN (GPS added Geo Augmented Navigation) Modul und/oder ein WAAS (Wide Area Augmentation System) Modul handeln. Ferner kann auch erweitertes Kartenmaterial zum Bestimmen der aktuellen Fahrzeugposition herangezogen werden, wobei es sich bei dem erweiterten Kartendaten um Daten einer digitalen Karte sowie zusätzlich um Informationen, bei welchen es sich um eine POI (Point of Interest) Information und/oder Webinformationen handelt, handeln kann.

Bei dem dargestellten Mittel 12 zum Bestimmen eines Straßentyps einer aktuell befahrenen Straße handelt es sich weiter um ein kamerabasiertes Umfelderfassungssystem 14. Ferner kann es sich bei dem Mittel 12 zum Bestimmen eines Straßentyps einer aktuell befahrenen Straße aber auch um weitere Umfelderfassungssensoren, welche geeignet sind einen Straßentyp einer aktuell befahrenen Straße zu detektieren, handeln.

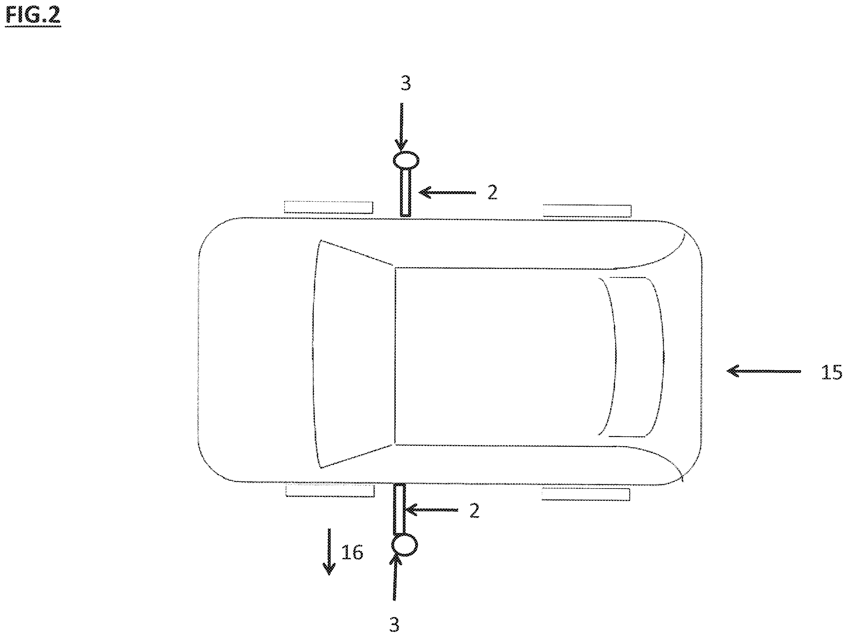

Figur 2 zeigt eine schematische Ansicht eines Kraftfahrzeuges 15 gemäß Ausführungsform der Erfindung. Komponenten und Bauteile mit gleicher Funktion oder Konstruktion wie in Figur 1 tragen dabei dieselben Bezugszeichen und werden nicht extra erörtert.

Dabei weist das Kraftfahrzeug 15 ein oben beschriebenes System zum Erfassen einer Fahrzeugumgebung auf.

Figur 2 zeigt die Außenspiegel 2 des Kraftfahrzeuges 15 dabei jeweils in ihrer Normalstellung. In dieser Stellung sind die an den jeweiligen Außenspiegeln 2 angeordneten Kameras 3, welche Teil eines 360°-Rundumsichtsystem für das Kraftfahrzeug sind, nach unten in Richtung einer Fahrbahnoberfläche gerichtet, um eine nähere Fahrzeugumgebung zu erfassen. Das Blickfeld der Kameras wird hierbei durch den mit Bezugszeichen 16 versehenen Pfeil symbolisiert.

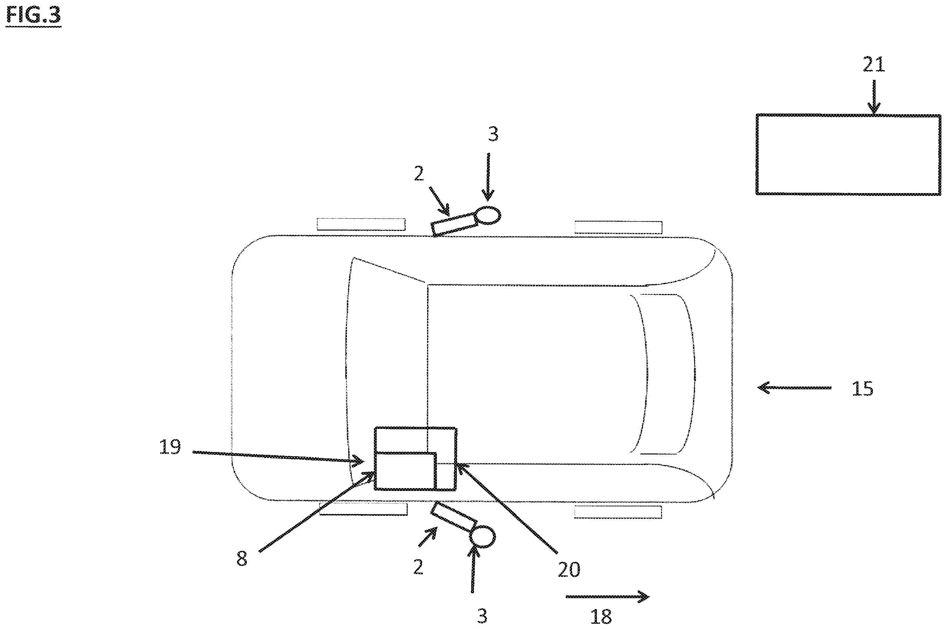

Figur 3 zeigt eine schematische Ansicht eines Kraftfahrzeuges 15 gemäß Ausführungsform der Erfindung. Komponenten und Bauteile mit gleicher Funktion oder Konstruktion wie in Figur 1 oder Figur 2 tragen dabei dieselben Bezugszeichen und werden nicht extra erörtert.

Figur 3 zeigt die Außenspiegel 2 des Kraftfahrzeuges 15 dabei jeweils in ihrer zum Fahrzeug geklappten Stellung. In dieser Stellung der Außenspiegel 2 weist das Kraftfahrzeug 15, verglichen mit der Normalstellung der Außenspiegel, einen geringeren Luftwiderstandsbeiwert auf, wodurch ein niedriger Kraftstoffverbrauch bei höheren Fahrzeuggeschwindigkeiten gewährleistet werden kann.

In dieser Stellung sind die an den jeweiligen Außenspiegeln 2 angeordneten Kameras 3, entgegen der Fahrtrichtung nach hinten gerichtet, um eine hintere Fahrzeugumgebung zu erfassen. Das Blickfeld der Kameras 3 wird hierbei durch den mit Bezugszeichen 18 versehenen Pfeil symbolisiert.

Die von den Kameras 3 erfassten Informationen werden dabei an die Anzeigeeinheit 8 weitergeleitet und auf dieser visualisiert. Gemäß den Ausführungsformen der Figur 3 handelt es sich bei der Anzeigeeinheit dabei um ein Head-up Display 19. Ferner kann es sich bei der Anzeigeeinheit aber auch beispielsweise um einen Bildschirm eines Infotainmentsystems des Kraftfahrzeuges handeln.

Wie Figur 3 zeigt, ist das Head-up Display 19 dabei derart innerhalb des Kraftfahrzeuges 15 angeordnet, dass die erfasste Fahrzeugumgebung hinter einer Seitenscheibe 20 des Kraftfahrzeuges 15 als virtuelles Bild wahrnehmbar ist. Dem Fahrer des Kraftfahrzeuges 13 wird die erfasste hintere Fahrzeugumgebung somit, auch wenn die Außenspiegel 2 eingeklappt sind, dort zur Verfügung gestellt, wo er diese intuitiv erwarten würde.

Figur 3 zeigt weiter ein sich von hinten näherndes weiteres Kraftfahrzeug 21. Da dem Fahrer des Kraftfahrzeuges 13 mittels der an den Außenspiegeln 2 angeordneten Kameras 3, welche als Ersatz für die Funktion der Außenspiegel dienen, falls diese in eine an das Fahrzeug 13 geklappte Stellung verschwenkt wurden, beispielsweise um den Kraftstoffverbrauch bei hohen Geschwindigkeiten zu reduzieren, auch in dieser Situation Informationen über eine hintere Fahrzeugumgebung zur Verfügung gestellt werden können, kann dieser rechtzeitig auf die Situation, insbesondere auf eine drohende Kollision mit dem sich nähernden weiteren Kraftfahrzeug 21, reagieren und entsprechende Fahrmanöver einleiten.

### Bezugszeichenliste

- 1: System
- 2: Außenspiegel
- 3: Kamera
- 4: Betätigungsmittel
- 5: Drehbewegung
- 6: Geschwindigkeitssensor
- 7: Vergleicher
- 8: Anzeigeeinheit
- 9: Steuerungsmittel
- 10: Mittel
- 11: Mittel zur Ortsbestimmung
- 12: Mittel
- 13: GPS-Modul
- 14: Umfelderfassungssystem
- 15: Kraftfahrzeug
- 16: Blickfeld
- 18: Blickfeld
- 19: Head-up Display
- 20: Seitenscheibe
- 21: weiteres Kraftfahrzeug

## Patentansprüche

1. System zum Erfassen einer Fahrzeugumgebung eines Kraftfahrzeuges, mit wenigstens einem verschwenkbaren Außenspiegel (2), welcher zwischen einer Normalstellung und einer zum Fahrzeug (15) geklappten Stellung verschwenkt werden kann, und einer an dem wenigstens einem verschwenkbaren Außenspiegel (2) angeordneten Kamera (3) zum Erfassen der Fahrzeugumgebung, wobei die Kamera (3) derart an dem wenigstens einen verschwenkbaren Außenspiegel (2) angeordnet ist, **dadurch gekennzeichnet dass**, in der Normalstellung des wenigstens einen Außenspiegels (2) ein Blickfeld (16) der Kamera (3) nach unten in Richtung einer Fahrbahnoberfläche gerichtet ist, zum Erfassen einer näheren Fahrzeugumgebung, und in der zum Fahrzeug (15) geklappten Stellung des wenigstens einen Außenspiegels (2) das Blickfeld (18) der Kamera (3) entgegen der Fahrtrichtung nach hinten gerichtet ist, zum Erfassen einer hinteren Fahrzeugumgebung.

2. System nach Anspruch 1, wobei das System weiter ein Betätigungsmittel (4) zum automatischen Verschwenken des wenigstens einen Außenspiegels (2) von der Normalstellung in die zum Fahrzeug (13) geklappte Stellung als Reaktion auf das Vorliegen einer Verschwenkbedingung aufweist.

3. System nach Anspruch 2, wobei es sich bei der Verschwenkbedingung um ein Überschreiten eines Grenzwertes für eine Fahrzeuggeschwindigkeit oder ein Unterschreiten eines Grenzwertes für eine Fahrbahnbreite handelt.

4. System nach einem der Ansprüche 1 bis 3, wobei das System (1) weiter eine Anzeigeeinheit (8) zum Visualisieren der durch die Kamera (3) erfassten Fahrzeugumgebung aufweist.

5. System nach einem der Ansprüche 1 bis 4, wobei das System (1) weiter ein Steuerungsmittel (9) zum Anpassen von Erfassungseigenschaften der Kamera (3) in Abhängigkeit einer aktuellen Stellung des wenigstens einen Außenspiegels (2) aufweist.

6. System nach Anspruch 5, wobei die Kamera (3) eine Zoomfunktion zum Einstellen eines Erfassungsbereichs der Kamera (3) aufweist und wobei das Steuerungsmittel (9) ausgebildet ist als Reaktion auf das Verschwenken des wenigstens einen Außenspiegels (2) von der Normalstellung in die zum Fahrzeug (15) geklappte Stellung, den Erfassungsbereich der Kamera (3) von einem Nahbereich auf einen Fernbereich zu ändern.

7. System nach Anspruch 6, wobei das System (1) weiter Mittel (10) zum Erfassen einer aktuellen Fahrsituation aufweist und wobei das Steuerungsmittel (9) weiter ausgebildet ist, den Fernbereich an die aktuelle Fahrsituation anzupassen.

8. System nach Anspruch 7, wobei die Mittel (10) zum Erfassen einer aktuellen Fahrsituation einen Geschwindigkeitssensor (6) zum Erfassen einer aktuellen Fahrzeuggeschwindigkeit und/oder Mittel zur Ortsbestimmung (11) zum Bestimmen eines aktuell durchfahrenen Ortes und/oder Mittel (12) zum Bestimmen eines Straßentyps einer aktuell befahrenen Straße aufweist.

9. Kraftfahrzeug, welches ein System (1) nach einem der Ansprüche 1 bis 8 aufweist.

10. Kraftfahrzeug nach Anspruch 9, wobei die Anzeigeeinheit (8) einen Bildschirm eines Infotainmentsystems des Kraftfahrzeuges oder ein Head-up Display (19) aufweist.

11. Kraftfahrzeug nach Anspruch 9 oder 10, wobei die Anzeigeeinheit (8) innerhalb des Kraftfahrzeuges (15) derart angeordnet ist, dass für den Fahrer des Kraftfahrzeuges (15) die erfasste Fahrzeugumgebung hinter einer Seitenscheibe (20) des Kraftfahrzeuges (15) als virtuelles Bild wahrnehmbar ist, falls sich der wenigstens eine Außenspiegel (2) in der zum Fahrzeug (15) geklappten Stellung befindet.

## Claims

1. A system for detecting a vehicle environment of a motor vehicle, having at least one pivotable exterior mirror (2) which can be pivoted between a normal position and a folded position with respect to the vehicle (15), and a camera (3) arranged on the at least one pivotable exterior mirror (2) for detecting the vehicle environment, wherein the camera (3) is arranged in such a manner on the at least one pivotable exterior mirror (2), **characterised in that**, in the normal position of the at least one exterior mirror (2), a field of view (16) of the camera (3) is directed downwards in the direction of a road surface for detecting an immediate vehicle environment and, in the folded position with respect to the vehicle (15) of the at least one exterior mirror (2), the field of view (18) of the camera (3) is directed backwards counter to the direction of travel for detecting a rear vehicle environment.

2. The system according to Claim 1, wherein the system additionally has actuating means (4) for automatically pivoting the at least one exterior mirror (2) from the normal position into the folded position with respect to the vehicle (13) as a reaction to the existence of a pivoting condition.

3. The system according to Claim 2, wherein the pivoting condition is an exceeding of a limit for a vehicle speed or a falling short of a limit for a lane width.

4. The system according to any one of Claims 1 to 3, wherein the system (1) additionally has a display unit (8) for visualizing the vehicle environment detected by the camera (3).

5. The system according to any one of Claims 1 to 4, wherein the system (1) additionally has control means (9) for adapting detection properties of the camera (3) as a function of a current position of the at least one exterior mirror (2).

6. The system according to Claim 5, wherein the camera (3) has a zoom function for adjusting a detection range of the camera (3) and wherein the control means (9) are configured, as a reaction to the pivoting of the at least one exterior mirror (2) from the normal position into the folded position with respect to the vehicle (15), to alter the detection range of the camera (3) from a close-up range to a long-distance range.

7. The system according to Claim 6, wherein the system (1) additionally has means (10) for detecting a current driving situation and wherein the control means (9) are additionally configured to adapt the long-distance range to the current driving situation.

8. The system according to Claim 7, wherein the means (10) for detecting a current driving situation have a speed sensor (6) for detecting a current vehicle speed and/or means for position fixing (11) in order to determine a location currently being driven through and/or means (12) for determining the road type of a road which is currently being driven on.

9. A motor vehicle which has a system (1) according to any one of Claims 1 to 8.

10. The motor vehicle according to Claim 9, wherein the display unit (8) has a screen of an infotainment system of the motor vehicle or a head-up display (19).

11. The motor vehicle according to Claim 9 or 10, wherein the display unit (8) is arranged inside the motor vehicle (15) in such a manner that the detected vehicle environment can be perceived as a virtual image by the driver of the motor vehicle (15) behind a side mirror (20) of the motor vehicle (15), if the at least one exterior mirror (2) is located in the folded position with respect to the vehicle (15).

## Revendications

1. Système pour détecter l'environnement d'un véhicule automobile, avec au moins un rétroviseur extérieur basculable (2), lequel peut être basculé d'une position normale à une position repliée vers le véhicule (15) et inversement, et une caméra (3) disposée sur l'au moins un rétroviseur extérieur basculable (2) pour la détection de l'environnement de véhicule, la caméra (3) étant disposée sur l'au moins un rétroviseur extérieur basculable (2), **caractérisé en ce que**, dans la position normale de l'au moins un rétroviseur extérieur (2), un champ de vision (16) de la caméra (3) est dirigé vers le bas en direction d'une surface de chaussée, pour la détection d'un environnement de véhicule proche, et dans la position repliée vers le véhicule (15) de l'au moins un rétroviseur extérieur (2), le champ de vision (18) de la caméra (3) étant dirigé vers l'arrière, dans le sens opposé au déplacement, pour la détection d'un environnement de véhicule arrière.

2. Système selon la revendication 1, le système présentant en outre un moyen d'actionnement (4) pour le basculement automatique de l'au moins un rétroviseur extérieur (2) de la position normale à la position repliée vers le véhicule (13), comme réaction à la présence d'une condition de basculement.

3. Système selon la revendication 2, la condition de basculement étant un dépassement d'une valeur limite pour une vitesse de véhicule ou un dépassement d'une valeur limite pour une largeur de chaussée.

4. Système selon l'une des revendications 1 à 3, le système (1) présentant en outre une unité d'affichage (8) pour la visualisation de l'environnement de véhicule détecté par la caméra (3).

5. Système selon l'une des revendications 1 à 4, le système (1) présentant en outre un moyen de commande (9) pour l'ajustement des propriétés de détection de la caméra (3) en fonction d'une position actuelle de l'au moins un rétroviseur extérieur (2).

6. Système selon la revendication 5, la caméra (3) présentant une fonction de zoom pour le réglage d'une zone de détection de la caméra (3) et le moyen de commande (9) étant formé pour modifier la zone de détection de la caméra (3) d'une zone proche en une zone distante, en réaction au basculement de l'au moins un rétroviseur extérieur (2) de la position normale à la position repliée vers le véhicule (15).

7. Système selon la revendication 6, le système (1) présentant en outre des moyens (10) pour la détection d'une situation de conduite actuelle et le moyen de commande (9) étant formé afin d'ajuster la zone distante à la situation de conduite actuelle.

8. Système selon la revendication 7, les moyens (10) pour la détection d'une situation de conduite actuelle présentant un capteur de vitesse (6) pour la détection d'une vitesse de véhicule actuelle et/ou des moyens pour la localisation (11) pour la détermination d'un lieu traversé actuellement et/ou des moyens (12) pour la détermination d'un type de route d'une route empruntée actuellement.

9. Véhicule automobile, lequel présente un système (1) selon l'une des revendications 1 à 8.

10. Véhicule automobile selon la revendication 9, l'unité d'affichage (8) présentant un écran d'un système d'infodivertissement du véhicule automobile ou un affichage tête haute (19).

11. Véhicule automobile selon la revendication 9 ou 10, l'unité d'affichage (8) à l'intérieur du véhicule automobile (15) étant disposée de telle sorte que, pour le conducteur du véhicule automobile (15), l'environnement de véhicule détecté derrière une vitre latérale (20) du véhicule automobile (15) peut être saisi comme image virtuelle, au cas où l'au moins un rétroviseur extérieur (2) se trouve dans la position repliée vers le véhicule (15).
